# EUROPÄISCHE PATENTSCHRIFT

(11) **EP 3 552 995 B1**
(45) Veröffentlichungstag und Bekanntmachung des Hinweises auf die Patenterteilung: **06.04.2022**
(21) Anmeldenummer: 18215275.1
(22) Anmeldetag: 21.12.2018
(51) Int. Cl.: B65B 35/40, B65G 19/24, B65B 21/06, B65B 21/24

(54) **ARBEITSMODUL FÜR EINE VERPACKUNGSVORRICHTUNG UND VERFAHREN ZUM UMGANG MIT ARTIKELN UND/ODER VERPACKUNGSMATERIAL**
WORK MODULE FOR A PACKAGING DEVICE AND METHOD FOR HANDLING ITEMS AND/OR PACKAGING MATERIAL
MODULE DE TRAVAIL POUR UN DISPOSITIF D'EMBALLAGE ET PROCÉDÉ DE MANIPULATION D'ARTICLES ET / OU DE MATÉRIAU D'EMBALLAGE

(30) Priorität: 10.04.2018 DE 102018108395
(43) Veröffentlichungstag der Anmeldung: 16.10.2019
(73) Patentinhaber: Krones Aktiengesellschaft, 93073 Neutraubling (DE)
(72) Erfinder: WESTERMEIER, Christian, 93073 Neutraubling (DE); BEER, Erhard, 93073 Neutraubling (DE); MOHR, Josef, 93073 Neutraubling (DE); GRIMM, Sebastian, 93073 Neutraubling (DE); KOLLMUSS, Manuel, 93073 Neutraubling (DE); OSTERHAMMER, Martin, 93073 Neutraubling (DE)
(74) Vertreter: Benninger, Johannes

(56) Entgegenhaltungen:
- EP-A1- 2 886 473
- EP-A1- 3 064 440
- EP-A2- 1 084 964
- DE-A1- 2 548 613
- DE-A1-102004 032 735
- IT-A1- UB20 159 738
- JP-A- H11 189 209
- JP-U- S59 120 711
- US-A- 5 085 612

## Beschreibung

Die vorliegende Erfindung betrifft ein Arbeitsmodul für eine Verpackungsvorrichtung und ein Verfahren zum Umgang mit Artikeln und/oder Verpackungsmaterial.

Für eine Zusammenstellung von einzelnen Gruppen von Artikeln und ihre nachfolgende Verpackung werden in der Praxis Reihen an Artikeln parallel zueinander bewegt, wobei aufeinanderfolgende Artikel aneinander anstehen können. Um einzelne Gruppen von Artikeln aus diesen in mehreren Reihen parallel zueinander bewegten Artikeln zu bilden, kann es sein, dass eine bestimmte Anzahl an vorauseilenden Artikeln gegenüber nachfolgenden Artikeln kurzzeitig beschleunigt wird. Hierzu können Einteilstäbe vorgesehen sein, welche rückseitig mit der bestimmten Anzahl an Artikeln in Anlage treten und die Artikel der bestimmten Anzahl sodann gegenüber den nachfolgenden Artikeln kurzzeitig beschleunigen. Auch gibt es Verpackungsvorrichtungen, bei welchen mittels solcher Einteilstäbe nachfolgende Artikel gegenüber den vorauseilenden Artikeln kurzzeitig verzögert werden. Bei beiden Ausführungsformen wird zwischen der bestimmten Anzahl an vorauseilenden Artikeln und nachfolgenden Artikeln eine relative Beabstandung gebildet, wodurch Gruppen an Artikeln entstehen, auf welche nachfolgend Verpackungsmaterial aufgebracht werden kann. Die Einteilstäbe sind an umlaufend bewegten Förderketten angeordnet. Der jeweilige relative Abstand bzw. Teilungsabstand von an den umlaufend bewegten Förderketten angeordneten Einteilstäben zueinander ist hierbei auf die jeweilige aus Artikeln zu bildende Gruppe abgestimmt.

Um die jeweiligen Gruppen an Artikeln mit Verpackungsmaterial zu versehen, besitzen Verpackungsvorrichtungen häufig eine Vielzahl an umlaufend bzw. rotierend bewegten Einschlagstäben, welche flächiges und ggf. durch Schrumpffolie oder Stretchfolie ausgebildetes Verpackungsmaterial auf eine jeweilige Gruppe an Artikeln aufbringen. Solche Einschlagstäbe sind in der Praxis zur umlaufenden bzw. rotierenden Bewegung an Förderketten angeordnet.

Umlaufende Förderketten, wie sie bei Verpackungsvorrichtungen beispielsweis zur Bewegung von Einschlagstäben und/oder Einteilstäben Verwendung finden, besitzen hohe Anschaffungskosten und müssen in regelmäßigen Abständen gewartet oder ersetzt werden. Da bei Verpackungsvorrichtungen verwendete Förderketten aus mehreren einzelnen Gliedern bestehen, die aus Metall gebildet sind, ist ein jeweiliger Betrieb einer solchen Verpackungsvorrichtung mit einer unerwünscht hohen Lautstärke verbunden.

Die EP 3 064 440 A1 offenbart eine Vorrichtung, welche Produkte mit einer Folie umwickelt. Die Vorrichtung umfasst auf zwei gegenüberliegenden Seiten angeordnete Stützplatten, wobei eine jeweilige Stützplatte eine umlaufend geführte Kette trägt. Die Kette ist um eine Antriebsscheibe und um Ritzel geführt. Alternativ kann die Kette auch durch einen Riemen gebildet sein. An der Kette ist mittels entsprechenden Verbindungsmitteln ein Stab angeordnet.

Eine vorrangige Aufgabe der Erfindung kann daher insbesondere darin gesehen werden, eine praktikable, unaufwendig zu realisierende und kostengünstige Möglichkeit bereitzustellen, mittels welcher die genannten Nachteile zumindest teilweise beseitigt werden.

Die Aufgabe der Erfindung wird durch ein Arbeitsmodul und ein Verfahren gelöst, welche die Merkmale in den unabhängigen Ansprüchen umfassen. Weitere vorteilhafte Ausgestaltungen werden durch die Unteransprüche beschrieben.

Die Erfindung betrifft ein zum Umgang mit Artikeln und/oder Verpackungsmaterial ausgebildetes Arbeitsmodul für eine Verpackungsvorrichtung. Die Verpackungsvorrichtung kann mehrere einzelne Module besitzen, mittels welchen Gruppen aus Artikeln gebildet werden und/oder mittels welchen Verpackungsmaterial auf Artikel aufgebracht wird und/oder mittels welchen palettierfähige Lagen auf eine zugeordnete Palette überführt werden. Das Arbeitsmodul kann in denkbaren Ausführungsformen als ein solches Modul ausgebildet sein, welches Bestandteil der Verpackungsvorrichtung ist.

Das Arbeitsmodul umfasst mindestens ein umlaufend geführtes Antriebsmittel. Weiter umfasst das Arbeitsmodul mehrere Formatteile, die zum Einwirken auf Artikel und/oder zum Umgang mit Verpackungsmaterial ausgebildet sind. Auch umfasst das Arbeitsmodul mehrere Haltemittel.

Es ist vorgesehen, dass das mindestens eine umlaufend geführte Antriebsmittel wenigstens einen umlaufend geführten Riemen umfasst, an welchen wenigstens einen umlaufend geführten Riemen die mehreren zum Einwirken auf Artikel und/oder zum Umgang mit Verpackungsmaterial ausgebildeten Formatteile über die mehreren Haltemittel mechanisch gekoppelt sind. Vorteilhafterweise besitzen Riemen gegenüber Förderketten geringere Anschaffungskosten und zeichnen sich gegenüber Förderketten durch einen Betrieb mit geringem Geräuschpegel aus.

Erfindungsgemäss sind die mehreren Haltemittel jeweils über wenigstens zwei Befestigungsbereiche am wenigstens einen umlaufend geführten Riemen angeordnet, wobei die jeweiligen wenigstens zwei Befestigungsbereich im Hinblick auf den Umfangsverlauf des wenigstens einen umlaufend geführten Riemens versetzt zueinander positioniert sind. Somit können die wenigstens zwei Befestigungsbereiche beabstandet zueinander am wenigstens einen umlaufend geführten Riemen positioniert sein.

Bewährt haben sich in der Praxis Ausführungsformen, bei welchen jedem der wenigstens zwei Befestigungsbereiche eine Leiste zugeordnet ist, welche jeweilige Leiste in eine durch eine Verzahnung des wenigstens einen umlaufend geführten Riemens ausgebildete Nut eingesetzt ist und welche jeweilige Leiste das jeweilige Haltemittel klemmend am wenigstens einen umlaufend geführten Riemen festsetzt. Beispielsweise kann für jede Leiste wenigstens eine Schraubverbindung vorgesehen sein, welche wenigstens eine Schraubverbindung den wenigstens einen umlaufend geführten Riemen durchsetzt und hierbei die jeweilige Leiste an einem als Bestandteils des jeweiligen Haltemittels ausgebildeten Flügel festsetzt.

Auch können die mehreren Haltemittel ihre jeweiligen wenigstens zwei Befestigungsbereiche zueinander abstandsveränderlich ausbilden. Erfindungsgemäss besitzen die mehreren Haltemittel jeweils mindestens eine Drehachse, um welche die jeweiligen wenigstens zwei Befestigungsbereiche eines jeweiligen Haltemittels unabhängig voneinander schwenkbar sind. Mittels einer Schwenkbewegung können die mehreren Haltemittel somit ggf. ihren Abstand zueinander verändern.

Durch die umlaufende Führung des wenigstens einen Riemens kann es sein, dass eine im Bereich einer Umlenkung befindliche Partie des wenigstens einen umlaufend geführten Riemens temporär gedehnt wird bzw. temporär reversibel elastisch verformt wird. Bei einer solchen Dehnung können die ggf. abstandsveränderlich ausgebildeten und an der im Bereich der Umlenkung befindlichen Partie angeordneten wenigstens zwei Befestigungsbereiche eines jeweiligen Haltemittels ihren relativen Abstand vergrößern und hierbei der temporären Dehnung bzw. der temporären reversiblen elastischen Verformung der Partie folgen. Verlässt die jeweilige Partie hierauf den Bereich der Umlenkung, so kann sich die bis dahin noch gedehnte Partie zusammenziehen bzw. die bis dahin noch reversibel elastisch verformte Partie rückverformen, wobei die wenigstens zwei weiterhin im Bereich der Partie festgesetzten Befestigungsbereiche des jeweiligen Haltemittels ihren relativen Abstand zueinander verkleinern bzw. sich einander annähern.

Um den wenigstens einen Riemen umlaufend zu führen, kann das Arbeitsmodul über mindestens eine Umlenkrolle und/oder über mindestens eine Antriebsrolle verfügen. Erfindungsgemäss besitzen die mehreren Haltemittel jeweils eine gemeinsame Drehachse für die jeweiligen wenigstens zwei Befestigungsbereiche, um welche jeweilige gemeinsame Drehachse die jeweiligen wenigstens zwei Befestigungsbereich eines jeweiligen Haltemittels unabhängig voneinander schwenkbar sind. Erfindungsgemäss besitzen die mehreren Haltemittel jeweils eine gemeinsame Drehachse für die jeweiligen wenigstens zwei Befestigungsbereich, um welche jeweilige gemeinsame Drehachse die jeweiligen wenigstens zwei Befestigungsbereich eines jeweiligen Haltemittels unabhängig voneinander schwenkbar sind, wobei die jeweiligen wenigstens zwei Befestigungsbereiche im Verlauf einer jeweiligen Schwenkbewegung um die gemeinsame Drehachse einer Kreisbahn folgen. Bei solchen Ausführungsformen können die wenigstens zwei Befestigungsbereiche im Bereich einer jeweiligen Umlenkrolle und/oder Antriebsrolle um die jeweilige gemeinsame Drehachse geschwenkt werden. Eine Rotationsachse der Umlenkrolle bzw. der Antriebsrolle und die Drehachse können parallel oder im Wesentlichen parallel zueinander orientiert sein.

Erfindungsgemäss bilden die mehreren Haltemittel für einen jeweiligen ersten Befestigungsbereich eine jeweilige erste Schwenkachse aus, um welche der jeweilige erste Befestigungsbereich gedreht werden kann. Zudem bilden die mehreren Haltemittel für einen jeweiligen zweiten Befestigungsbereich eine jeweilige zweite Schwenkachse aus, um welche jeweilige zweite Schwenkachse der jeweilige zweite Befestigungsbereich gedreht werden kann. Die erste Schwenkachse und die zweite Schwenkachse eines jeweiligen Haltemittels sind entlang des Umfangsverlaufs des jeweiligen wenigstens einen umlaufend geführten Riemens versetzt und vorzugsweise parallel zueinander orientiert.

Erfindungsgemäss besitzen die mehreren Haltemittel jeweils eine gemeinsame Drehachse für die jeweiligen wenigstens zwei Befestigungsbereiche, um welche jeweilige gemeinsame Drehachse die jeweiligen wenigstens zwei Befestigungsbereiche eines jeweiligen Haltemittels unabhängig voneinander schwenkbar sind. Zusätzlich bilden die mehreren Haltemittel für einen jeweiligen ersten Befestigungsbereich eine jeweilige erste Schwenkachse aus, um welche der jeweilige erste Befestigungsbereich gedreht werden kann und bilden die mehreren Haltemittel für einen jeweiligen zweiten Befestigungsbereich eine jeweilige zweite Schwenkachse aus, um welche jeweilige zweite Schwenkachse der jeweilige zweite Befestigungsbereich gedreht werden kann. Die erste Schwenkachse, die zweite Schwenkachse und die gemeinsame Drehachse sind entlang des Umfangsverlaufs des jeweiligen wenigstens einen umlaufend geführten Riemens versetzt und parallel zueinander orientiert. Insbesondere kann die gemeinsame Drehachse hierbei zwischen der ersten Schwenkachse und der zweiten Schwenkachse angeordnet sein.

Auch können die mehreren Haltemittel eine jeweilige insbesondere als Aufnahme ausgebildete Befestigung für ein jeweiliges Formatteil bereitstellen, wobei die insbesondere als Aufnahme ausgebildete Befestigung und die gemeinsame Drehachse fluchtend zueinander orientiert sind. In denkbaren Ausführungsformen kann das jeweilige Formatteil selbst die gemeinsame Drehachse ausbilden bzw. die gemeinsame Drehachse bereitstellen.

Weiter kann das Arbeitsmodul mindestens eine vorzugsweise als Schiene ausgebildete Stütze umfassen. Hierbei kann vorgesehen sein, dass die mindestens eine vorzugsweise als Schiene ausgebildete Stütze derart positioniert ist, dass die mehreren Haltemittel im Verlauf einer über den wenigstens einen Riemen bewirkten und im Wesentlichen linearen Bewegung mit der mindestens einen vorzugsweise als Schiene ausgebildeten Stütze in Oberflächenkontakt stehen.

Auch kann es sein, dass die mehreren Haltemittel jeweils mindestens eine seitlich vom jeweiligen Haltemittel abstehende Lauf- und/oder Gleitrolle besitzen, über welche jeweilige mindestens eine seitlich vom jeweiligen Haltemittel abstehende Lauf- und/oder Gleitrolle das jeweilige Haltemittel mit der mindestens einen vorzugsweise als Schiene ausgebildeten Stütze in Oberflächenkontakt steht.

Weiter haben sich Ausführungsformen bewährt, bei welchen die mehreren Haltemittel jeweils mindestens eine erste seitlich vom jeweiligen Haltemittel abstehende Lauf- und/oder Gleitrolle sowie jeweils mindestens eine zweite vom jeweiligen Haltemittel seitlich abstehende Lauf- und/oder Gleitrolle umfassen, wobei die mehreren Haltemittel über ihre ersten und zweiten Lauf- und/oder Gleitrollen mit der mindestens einen vorzugsweise als Schiene ausgebildeten Stütze in Oberflächenkontakt stehen. Hierbei kann vorgesehen sein, dass die erste Lauf- und/oder Gleitrolle und die zweiten Lauf- und/oder Gleitrolle eines jeweiligen Haltemittels unabhängig voneinander um die gemeinsame Drehachse eines jeweiligen Haltemittels schwenkbar sind.

Die Erfindung betrifft darüber hinaus ein Verfahren zum Umgang mit Artikeln und/oder Verpackungsmaterial. Für das Verfahren bzw. zur Umsetzung des Verfahrens ist ein Arbeitsmodul gemäß einer Ausführungsform der vorhergehenden Beschreibung vorgesehen. Weiter ist für das erfindungsgemäße Verfahren vorgesehen, dass der wenigstens eine umlaufend geführte Riemen rotierend bewegt wird, woraus resultierend die mehreren Formatteile auf Artikel einwirken und/oder woraus resultierend die mehreren Formatteile Verpackungsmaterial auf Artikel aufbringen.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, das erfindungsgemäße Arbeitsmodul Teil eines Antriebsmittels sein, das bspw. als Riemen ausgebildet sein kann. Das Arbeitsmodul kann über mehrere Haltemittel verfügen. Jedes dieser Haltemittel kann jeweils einen ersten Flügel und einen zweiten Flügel umfassen. Der jeweilige erste Flügel bildet hierbei einen ersten Befestigungsbereich aus, über welchen der jeweilige erste Flügel am Riemen festgesetzt ist.

Weiter bildet der zweite Flügel einen zweiten Befestigungsbereich aus, über welchen der jeweilige zweite Flügel am Riemen festgesetzt ist. Wahlweise kann für den jeweiligen ersten Befestigungsbereich eine erste Leiste vorgesehen sein, die in eine durch den Riemen ausgebildete Verzahnung eingesetzt ist und den Riemen klemmend am jeweiligen ersten Flügel des jeweiligen Haltemittels festsetzt. Zudem kann für den zweiten Befestigungsbereich eine zweite Leiste vorgesehen sein, die ebenso in eine durch den Riemen ausgebildete Verzahnung eingesetzt ist und den Riemen klemmend am jeweiligen zweiten Flügel des jeweiligen Haltemittels festsetzt.

Die für den ersten Befestigungsbereich und den zweiten Befestigungsbereich vorgesehenen Leisten liegen vorzugsweise jeweils an einer nach innen gewandten Seite des Riemens flächig an und setzen den Riemen klemmend am jeweiligen Haltemittel fest. Die jeweilige Leiste erstreckt sich hierbei jeweils zumindest näherungsweise vollständig über eine gesamte Breite des Riemens.

Das erste über den ersten Befestigungsbereich und den zweiten Befestigungsbereich am Riemen befestigte Haltemittel befindet sich in einem Bereich, in welchem der Riemen umgelenkt wird. Hingegen befindet sich das über den ersten Befestigungsbereich und den zweiten Befestigungsbereich am Riemen festgesetzte zweite Haltemittel in einem Bereich, in welchem das Antriebsmittel bzw. der Riemen in linearer Richtung bewegt wird. Der erste Flügel kann mit seinem ersten Befestigungsbereich gegenüber dem zweiten Flügel mit seinem zweiten Befestigungsbereich geschwenkt werden. Hierzu stehen der jeweilige erste Flügel und der jeweilige zweite Flügel schwenkbar mit einer gemeinsamen Drehachse in Verbindung. Vorteilhafterweise kann das jeweilige Haltemittel im Bereich einer für den Riemen vorgesehenen Umlenkung einer kurvenförmigen Bewegungsrichtung des Riemens folgen und hierdurch aus einer Orientierung des zweiten Haltemittels in eine Orientierung des ersten Haltemittels gelangen.

Das erste Haltemittel kann eine erste Lauf- und/oder Gleitrolle sowie eine zweite Lauf- und/oder Gleitrolle umfassen. Die erste Lauf- und/oder Gleitrolle und die zweite Lauf- und/oder Gleitrolle stehen jeweils vom ersten Haltemittel ab und ragen hierbei seitlich über den Riemen hinaus. Hierdurch können die die erste Lauf- und/oder Gleitrolle sowie die zweite Lauf- und/oder Gleitrolle des ersten Haltemittel im Verlauf einer über den wenigstens einen Riemen bewirkten linearen Bewegung des ersten Haltemittels jeweils mit einer vorzugsweise als Bestandteil des Arbeitsmoduls ausgebildeten Schiene, bei welcher es sich um eine Stütze handeln kann, in Oberflächenkontakt stehen.

Hierdurch können sowohl die erste Lauf- und/oder Gleitrolle als auch die zweite Lauf- und/oder Gleitrolle jeweils mit einer in Richtung nach unten gewandten Seite bzw. Fläche der Schiene in Oberflächenkontakt stehen. Die Schiene ist somit zumindest während eines Oberflächenkontaktes zu der ersten Lauf- und/oder Gleitrolle und der zweiten Lauf- und/oder Gleitrolle oberhalb der jeweiligen ersten Lauf- und/oder Gleitrolle sowie oberhalb der jeweiligen zweiten Lauf- und/oder Gleitrolle positioniert.

Durch den Oberflächenkontakt zwischen der ersten Lauf- und/oder Gleitrolle und der zweiten Lauf- und/oder Gleitrolle und der Schiene kann einer ungewollten Torsion des Riemens entgegengewirkt werden. Die Schiene stellt daher zumindest für einen Bereich, in welchem der Riemen einer zumindest näherungsweise linearen Bewegungsrichtung folgt, über die erste Lauf- und/oder Gleitrolle und die zweite Lauf- und/oder Gleitrolle eine Zwangsführung für das Antriebsmittel bzw. den Riemen bereit.

Weiterhin kann ein über das jeweilige Haltemittel am Riemen festgesetzte Formatteil vorgesehen sein. Das am Haltemittel angeordnete Formatteil kann hierbei selbst eine gemeinsame Drehachse bereitstellen, um welche der erste Befestigungsbereich und der zweite Befestigungsbereich unabhängig voneinander schwenkbar sind.

Mittels der hier beschriebenen Vorrichtung können bspw. Artikel bzw. Getränkebehälter mittels mehrerer Formatteile auf einen Palettierer geschoben werden. Die Formatteile treten hierbei mit mehreren Artikeln einer jeweiligen palettierfähigen Lage rückseitig in Oberflächenkontakt und schieben hierbei die jeweilige palettierfähige Lage auf eine über den Palettierer bereitgestellte Beladeplatte.

Ein weiteres Formatteil kann vorgesehen sein, welches während des Schiebens ohne oder mit geringem Abstand zu vorauseilenden Artikeln bzw. Getränkebehältern der jeweiligen palettierfähigen Lage bewegt wird und hierbei verhindert, dass jeweilige vorauseilende Artikel bzw. Getränkebehälter einer jeweiligen palettierfähigen Lage während des Schiebens ungewollt kippen.

In der Praxis kann das Formatteil, welches über Haltemittel am Riemen festgesetzt ist, auch durch weitere Formatteile ausgebildet sein, die sich hinsichtlich des konstruktiven Aufbaus und/oder der Funktion von den hier beschriebenen Formatteilen unterscheiden können. So kann es beispielsweise sein, dass über Formatteile, die über Haltemittel an einem jeweiligen Riemen festgesetzt sind, Gruppen aus einzelnen Artikeln gebildet werden. Auch kann es beispielsweise sein, dass über Formatteile, die über Haltemittel an einem jeweiligen Riemen festgesetzt sind, flächiges thermoplastisches Verpackungsmaterial auf einzelne Gruppen an Artikeln aufgebracht wird.

Die erwähnte Drehachse verläuft durch das Formatteil, welches über das Haltemittel am Riemen festgesetzt ist. Die erste Lauf- und/oder Gleitrolle und die zweite Lauf- und/oder Gleitrolle können jeweils seitlich über den Riemen hinausragen. Auch für die erste Lauf- und/oder Gleitrolle und die zweite Lauf- und/oder Gleitrolle des zweiten Haltemittels kann vorgesehen sein, dass die erste Lauf- und/oder Gleitrolle und die zweite Lauf- und/oder Gleitrolle des zweiten Haltemittels seitlich über den Riemen hinausragen.

Das Haltemittel kann wahlweise ein erstes Zwischenstück und ein zweites Zwischenstück umfassen, die gemeinsam das Formatteil halten. Das Formatteil wird über das erste Zwischenstück und das zweite Zwischenstück jeweils schwenkbeweglich gehalten, so dass das Formatteil selbst die gemeinsame Drehachse bereitstellt oder ausbildet. Insbesondere wird das Formatteil vom ersten Zwischenstück und vom zweiten Zwischenstück somit derart gehalten, dass das erste Zwischenstück und das zweite Zwischenstück unabhängig voneinander um eine durch das Formatteil verlaufende und ggf. durch das Formatteil selbst ausgebildete gemeinsame Drehachse schwenkbar sind.

Am ersten Zwischenstück ist die erste Lauf- und/oder Gleitrolle angeordnet. Am zweiten Zwischenstück ist die zweite Lauf- und/oder Gleitrolle angeordnet. Somit sind die erste Lauf- und/oder Gleitrolle und die zweite Lauf- und/oder Gleitrolle zusammen mit dem jeweiligen Zwischenstück um die gemeinsame Drehachse schwenkbar.

Weiterhin kann vorgesehen sein, dass eine erste Schwenkachse durch die am ersten Zwischenstück angeordnete erste Lauf- und/oder Gleitrolle verläuft. Der Flügel, welcher den ersten Befestigungsbereich ausbildet und das Zwischenstück können um diese erste Schwenkachse relativ zueinander verdreht oder verschwenkt werden. Ebenso verläuft eine zweite Schwenkachse durch die zweite Lauf- und/oder Gleitrolle. Der zweite Flügel, welcher den zweiten Befestigungsbereich ausbildet, und das zweite Zwischenstück sind somit vorzugsweise um diese zweite Schwenkachse relativ zueinander drehbar. Durch die durch das erste Haltemittel ausgebildete gemeinsame Drehachse, die erste Schwenkachse 15 und die zweite Schwenkachse besitzt das Haltemittel eine hohe Flexibilität und kann hierdurch der Bewegung und Dehnung des Riemens im Bereich einer Umlenkung folgen.

Das hier beschriebene Arbeitsmodul umfasst einen ersten umlaufend bewegten Riemen, an welchem über Haltemittel mehrere Formatteile angeordnet sind, was zuvor schon im Detail erläutert wurde. Zudem kann das Arbeitsmodul einen zweiten umlaufend bewegten Riemen umfassen, an welchem weiterhin über Haltemittel mehrere Formatteile angeordnet sein können. Zudem kann ein weiterer erster umlaufend bewegter Riemen und ein weiterer zweiter umlaufend bewegter Riemen vorgesehen sein, welche auf einer gegenüberliegenden Seite des Transportbereichs angeordnet sein können. Eine optionale Mitnehmerwelle kann auf gegenüberliegenden Seiten des Transportbereichs angeordnete Riemen antriebstechnisch aneinander oder miteinander koppeln.

Die über Haltemittel am ersten Riemen festgesetzten Formatteile treten mit Artikeln einer jeweiligen palettierfähigen Lage rückseitig in Anlage und Schieben hierdurch die jeweilige palettierfähige Lage an Artikeln über den Transportbereich. Die am zweiten Riemen angeordneten Formatteile werden hierbei mit keinem oder geringem Abstand zu vordersten Artikeln der jeweiligen palettierfähigen Lage gemeinsam mit der jeweiligen palettierfähigen Lage über den Transportbereich bewegt und verhindern hierbei, dass die jeweiligen vordersten Artikel einer jeweiligen palettierfähigen Lage während des Schiebens ungewollt kippen.

Der Riemen kann bspw. über eine Antriebsrolle angetrieben werden. Der Riemen kann zudem über eine Umlenkrolle geführt sein.

Wie zuvor bereits beschrieben, verfügt ein jeweiliges Haltemittel über eine erste Lauf- und/oder Gleitrolle sowie über eine zweite Lauf- und/oder Gleitrolle. Eine erste als Stütze ausgebildete Schiene kann dem ersten Riemen zugeordnet sein. Eine zweite Schiene, die ebenso als zweite Stütze ausgebildet ist, kann dem zweiten Riemen zugeordnet sein.

Die oben erwähnten Lauf- und/oder Gleitrollen, welche als Bestandteil von am ersten Riemen festgesetzten Haltemitteln ausgebildet sind, können mit der dem ersten Riemen zugeordneten Schiene bzw. mit der dem ersten Riemen zugeordneten Stütze in Oberflächenkontakt stehen und werden hierdurch über die dem ersten Riemen zugeordnete Schiene bzw. über die dem ersten Riemen zugeordnete Stütze geführt. Lauf- und/oder Gleitrollen, welche als Bestandteil von am zweiten Riemen festgesetzten Haltemitteln ausgebildet sind, stehen mit der dem zweiten Riemen zugeordneten Schiene bzw. mit der dem zweiten Riemen zugeordneten Stütze in Oberflächenkontakt und werden über die dem zweiten Riemen zugeordnete Schiene bzw. über die dem zweiten Riemen zugeordnete Stütze geführt.

Hierdurch kann einer ungewollten Torsion des ersten Riemens und des zweiten Riemens entgegengewirkt werden. Um einer solchen Torsion auch in einem Bereich entgegenzuwirken, welcher sich zwischen der Umlenkrolle und der Antriebswelle oder Antriebsrolle befindet, kann in diesem Bereich eine Führung vorgesehen sein, welche flächig mit dem jeweiligen Riemen in Oberflächenkontakt steht.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise des erfindungsgemäßen Arbeitsmoduls ein besseres Verständnis für den in den Ansprüchen sowie im allgemeinen Teil der Beschreibung allgemeiner und/oder abstrakter formulierten Erfindungsgedanken abzuleiten.
Fig. 1 zeigt eine schematische Perspektivansicht einer Ausführungsform eines Riemens sowie mehrere Haltemittel, wie sie bei diversen Ausführungsformen eines erfindungsgemäßen Arbeitsmoduls vorgesehen sein können.
Fig. 2 zeigt eine weitere schematische Perspektivansicht der Ausführungsform eines Riemens und der Haltemittel aus Fig. 1.
Fig. 3 zeigt eine schematische Draufsicht auf die Ausführungsform eines Riemens und der mehreren Haltemittel aus den Figuren 1 und 2.
Fig. 4 zeigt eine schematische Perspektivansicht einer Ausführungsform eines erfindungsgemäßen Arbeitsmoduls.
Fig. 5 zeigt eine schematische Perspektivansicht mit einzelnen Details der Ausführungsform eines Arbeitsmoduls gemäß Fig. 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

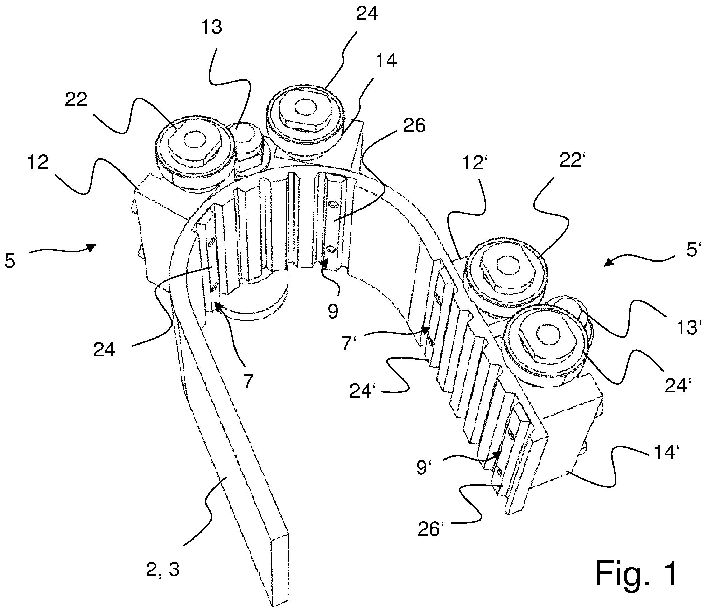

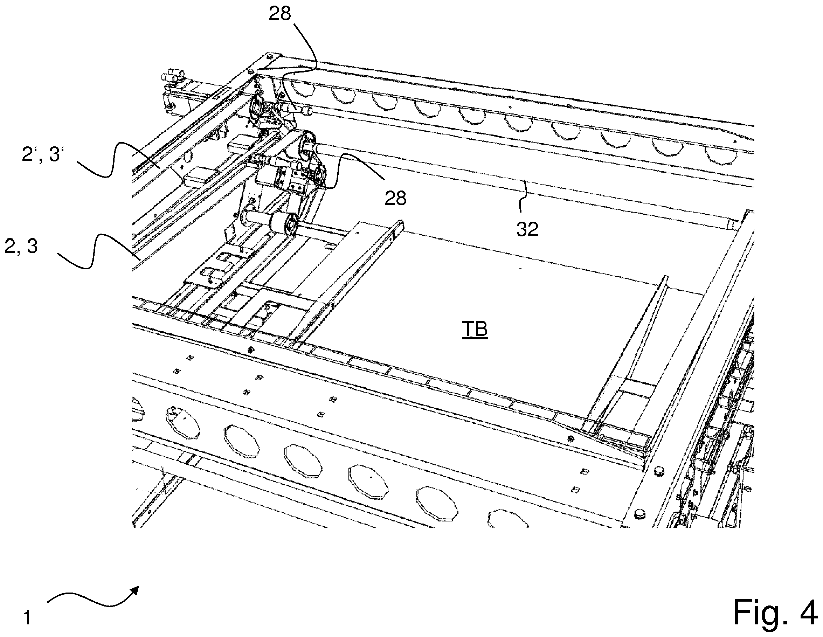

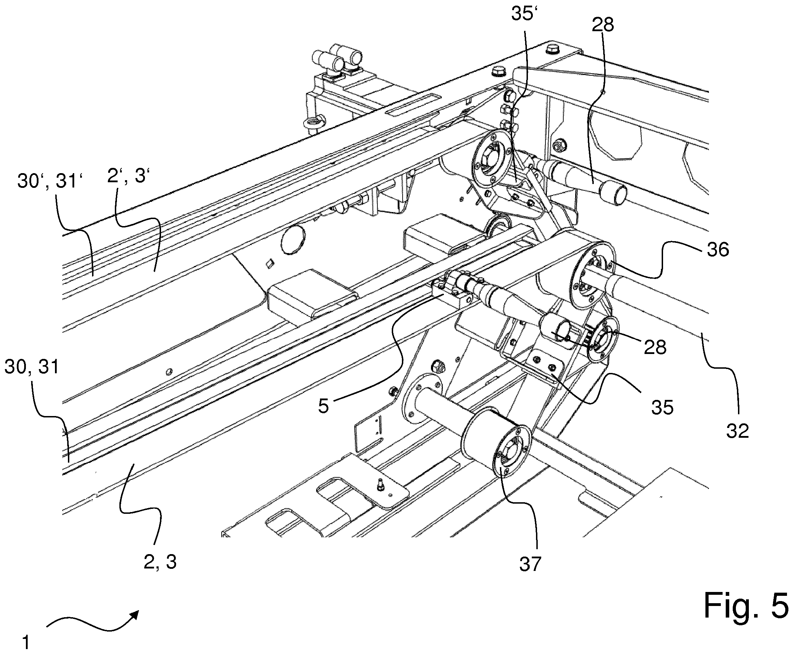

Die Fig. 1 zeigt eine schematische Perspektivansicht einer Ausführungsform eines als Riemen 3 ausgebildeten Antriebsmittels 2 sowie mehrere Haltemittel 5 und 5', wie sie bei diversen Ausführungsformen eines erfindungsgemäßen Arbeitsmoduls 1 (vgl. Figuren 4 und 5) vorgesehen sein können. Sowohl das in Fig. 1 dargestellte erste Haltemittel 5 als auch das in Fig. 1 dargestellte zweite Haltemittel 5' umfassen jeweils einen ersten Flügel 12 bzw. 12' und einen zweiten Flügel 14 bzw. 14'. Der jeweilige erste Flügel 12 bzw. 12' bildet hierbei einen jeweiligen ersten Befestigungsbereich 7 aus, über welchen der jeweilige erste Flügel 12 bzw. 12' am Riemen 3 festgesetzt ist. Weiter bildet der jeweilige zweite Flügel 14 bzw. 14' einen jeweiligen zweiten Befestigungsbereich 9 bzw. 9' aus, über welchen der jeweilige zweite Flügel 14 bzw. 14' am Riemen 3 festgesetzt ist.

Wie es die Fig. 1 erkennen lässt, ist für den jeweiligen ersten Befestigungsbereich 7 bzw. 7' eine jeweilige erste Leiste 24 bzw. 24' vorgesehen, die in eine durch den Riemen 3 ausgebildete Verzahnung eingesetzt ist und den Riemen 3 klemmend am jeweiligen ersten Flügel 12 bzw. 12' des jeweiligen Haltemittels 5 bzw. 5' festsetzt. Zudem ist für den jeweiligen zweiten Befestigungsbereich 9 bzw. 9' eine jeweilige zweite Leiste 26 bzw. 26' vorgesehen, die ebenso in eine durch den Riemen 3 ausgebildete Verzahnung eingesetzt ist und den Riemen 3 klemmend am jeweiligen zweiten Flügel 14 bzw. 14' des jeweiligen Haltemittels 5 bzw. 5' festsetzt.

Die für den ersten Befestigungsbereich 7 bzw. 7' und den zweiten Befestigungsbereich 9 bzw. 9' vorgesehenen Leisten 24, 24', 26 und 26' liegen jeweils an einer nach innen gewandten Seite des Riemens 3 flächig an und setzen den Riemen 3 klemmend am jeweiligen Haltemittel 5 bzw. 5' fest. Die jeweilige Leiste 24, 24', 26 und 26' erstreckt sich hierbei jeweils zumindest näherungsweise vollständig über eine gesamte Breite des Riemens 3.

Das erste über den ersten Befestigungsbereich 7 und den zweiten Befestigungsbereich 9 am Riemen 3 befestigte Haltemittel 5 befindet sich in einem Bereich, in welchem der Riemen 5 umgelenkt wird. Hingegen befindet sich das über den ersten Befestigungsbereich 7' und den zweiten Befestigungsbereich 9' am Riemen 3 festgesetzte zweite Haltemittel 5' in einem Bereich, in welchem das Antriebsmittel 2 bzw. der Riemen 3 entsprechend Fig. 1 in linearer Richtung bewegt wird. Eine Zusammenschau des ersten Haltemittels 5 mit dem zweiten Haltemittel 5' nach Fig. 1 verdeutlicht hierbei, dass der jeweilige erste Flügel 12 bzw. 12' mit seinem jeweiligen ersten Befestigungsbereich 7 bzw. 7' gegenüber dem jeweiligen zweiten Flügel 14 bzw. 14' mit seinem jeweiligen zweiten Befestigungsbereich 9 bzw. 9' geschwenkt werden kann. Hierzu stehen der jeweilige erste Flügel 12 bzw. 12' und der jeweilige zweite Flügel 14 bzw. 14' schwenkbar mit einer gemeinsamen Drehachse 13 bzw. 13' in Verbindung. Vorteilhafterweise kann das jeweilige Haltemittel 5 bzw. 5' im Bereich einer für den Riemen 3 vorgesehenen Umlenkung einer kurvenförmigen Bewegungsrichtung des Riemens 3 folgen und hierdurch aus einer für das zweite Haltemittel 5' in Fig. 1 gezeigten Orientierung in die für das erste Haltemittel 5 in Fig. 1 gezeigte Orientierung gelangen.

Das erste Haltemittel 5 umfasst eine erste Lauf- und/oder Gleitrolle 22 sowie eine zweite Lauf- und/oder Gleitrolle 24. Die erste Lauf- und/oder Gleitrolle 22 und die zweite Lauf- und/oder Gleitrolle 24 stehen jeweils vom ersten Haltemittel 5 ab und ragen hierbei seitlich über den Riemen 3 hinaus. Hierdurch können die die erste Lauf- und/oder Gleitrolle 22 sowie die zweite Lauf- und/oder Gleitrolle 24 des ersten Haltemittel 5 im Verlauf einer über den wenigstens einen Riemen 3 bewirkten linearen Bewegung des ersten Haltemittels 5 jeweils mit einer in den Figuren 4 und 5 als Bestandteil des Arbeitsmoduls 1 ausgebildeten Schiene 30 bzw. 30', bei welcher es sich um eine Stütze 31 bzw. 31' handelt, in Oberflächenkontakt stehen.

Wie nachfolgend in Fig. 4 und Fig. 5 gezeigt, stehen sowohl die erste Lauf- und/oder Gleitrolle 22 sowie die zweite Lauf- und/oder Gleitrolle 24 hierbei jeweils mit einer in Richtung nach unten gewandten Seite bzw. Fläche der Schiene 30 bzw. 30' in Oberflächenkontakt. Die Schiene 30 bzw. 30' ist somit zumindest während eines Oberflächenkontaktes zu der ersten Lauf- und/oder Gleitrolle 22 bzw. 22' und der zweiten Lauf- und/oder Gleitrolle 24 bzw. 24' oberhalb der jeweiligen ersten Lauf- und/oder Gleitrolle 22 bzw. 22' sowie oberhalb der jeweiligen zweiten Lauf- und/oder Gleitrolle 24 bzw. 24' positioniert. Durch den Oberflächenkontakt zwischen der ersten Lauf- und/oder Gleitrolle 22 bzw. 22' und der zweiten Lauf- und/oder Gleitrolle 24 bzw. 24' und der Schiene 30 bzw. 30' kann einer ungewollten Torsion des Riemens 3 entgegengewirkt werden. Die Schiene 30 bzw. 30' stellt daher zumindest für einen Bereich, in welchem der Riemen 3 einer zumindest näherungsweise linearen Bewegungsrichtung folgt, über die erste Lauf- und/oder Gleitrolle 22 bzw. 22' und die zweite Lauf- und/oder Gleitrolle 24 bzw. 24' eine Zwangsführung für das Antriebsmittel 2 bzw. den Riemen 3 bereit.

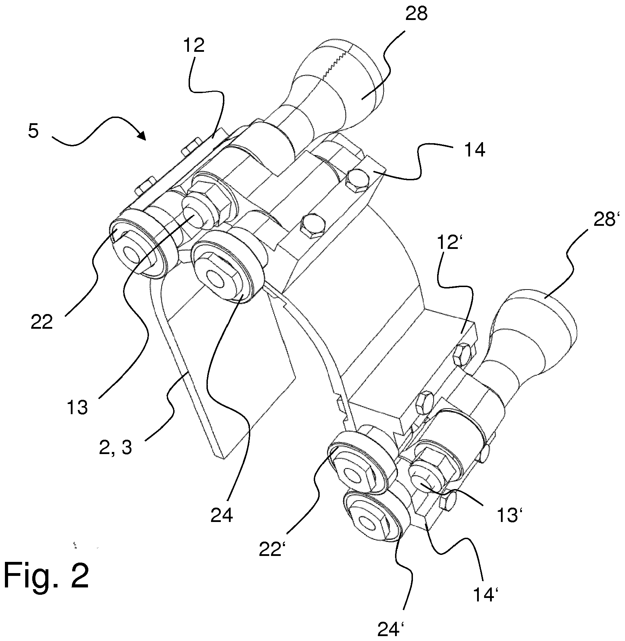

Die Fig. 2 zeigt eine weitere schematische Perspektivansicht der Ausführungsform eines Riemens 3 und der Haltemittel 5 und 5' aus Fig. 1. Dargestellt sind weiterhin der als Bestandteil des ersten Haltemittels 5 ausgebildete erste Flügel 12 und zweite Flügel 14 sowie der als Bestandteil des zweiten Haltemittels 5' ausgebildete erste Flügel 12' und zweite Flügel 14'.

Insbesondere lässt die Fig. 2 nun ein über das jeweilige Haltemittel 5 bzw. 5' am Riemen 3 festgesetztes Formatteil 28 erkennen. Das Formatteil 28 ist in Fig. 2 nur abschnittsweise dargestellt und besitzt in der Praxis eine tatsächliche Längserstreckung entlang der Drehachse 13, welche über die in Fig. 2 dargestellte Längserstreckung hinausreicht. Das am jeweiligen Haltemittel 5 bzw. 5' angeordnete Formatteil 28 bzw. 28' kann hierbei selbst die jeweilige gemeinsame Drehachse 13 bereitstellen, um welche der jeweilige erste Befestigungsbereich 7 bzw. 7' (vgl. Fig. 1) und der jeweilige zweite Befestigungsbereich 9 bzw. 9' unabhängig voneinander schwenkbar sind.

Bei der Ausführungsform aus Fig. 2 können Artikel bzw. Getränkebehälter mittels mehrerer Formatteile 28 auf einen Palettierer geschoben werden. Die Formatteile 28 treten hierbei mit mehreren Artikeln einer jeweiligen palettierfähigen Lage rückseitig in Oberflächenkontakt und schieben hierbei die jeweilige palettierfähige Lage auf eine über den Palettierer bereitgestellte Beladeplatte. Ein weiteres Formatteil 28 ist vorgesehen, welches während des Schiebens ohne oder mit geringem Abstand zu vorauseilenden Artikeln bzw. Getränkebehältern der jeweiligen palettierfähigen Lage bewegt wird und hierbei verhindert, dass jeweilige vorauseilende Artikel bzw. Getränkebehälter einer jeweiligen palettierfähigen Lage während des Schiebens ungewollt kippen.

In der Praxis kann das Formatteil 28, welches über Haltemittel 5 bzw. 5' am Riemen 3 festgesetzt ist, auch durch weitere Formatteile 28 ausgebildet sein, die sich hinsichtlich des konstruktiven Aufbaus und/oder der Funktion von dem in den Figuren der vorliegenden Patentanmeldung gezeigtem Formatteil 28 unterscheiden. So kann es beispielsweise sein, dass über Formatteile 28, die über Haltemittel 5 bzw. 5' an einem jeweiligen Riemen 3 festgesetzt sind, Gruppen aus einzelnen Artikeln gebildet werden. Auch kann es beispielsweise sein, dass über Formatteile 28, die über Haltemittel 5 bzw. 5' an einem jeweiligen Riemen 3 festgesetzt sind, flächiges thermoplastisches Verpackungsmaterial auf einzelne Gruppen an Artikeln aufgebracht wird.

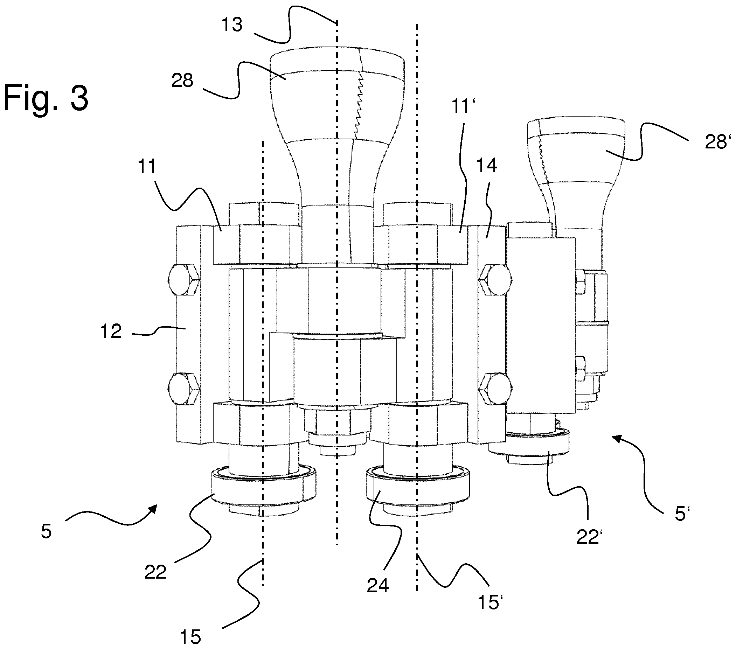

Die Fig. 3 zeigt eine schematische Draufsicht auf die Ausführungsform eines Riemens 3 und der mehreren Haltemittel 5 und 5' aus den Figuren 1 und 2. Insbesondere lässt Fig. 3 nochmals den Verlauf bzw. die Orientierung der Drehachse 13 erkennen, um welche der erste Flügel 12 und der zweite Flügel 14 des ersten Haltemittels 5 geschwenkt werden können. Die Drehachse 13 verläuft durch das Formatteil 28, welches über das Haltemittel 5 am Riemen 3 festgesetzt ist.

Der in den Figuren 1 und 2 noch zu erkennende Riemen 3 wird in Fig. 3 durch die Haltemittel 5 und 5' verdeckt. Fig. 3 verdeutlicht hierbei, dass die erste Lauf- und/oder Gleitrolle 22 und die zweite Lauf- und/oder Gleitrolle 24 jeweils seitlich über den in Fig. 3 durch die Haltemittel 5 und 5' verdeckten Riemen 3 hinausragen. Auch für die erste Lauf- und/oder Gleitrolle 22' und die in Fig. 3 nicht zu erkennende zweite Lauf- und/oder Gleitrolle 24' des zweiten Haltemittels 5' ist vorgesehen, dass die erste Lauf- und/oder Gleitrolle 22' und die zweite Lauf- und/oder Gleitrolle 24' des zweiten Haltemittels 5' seitlich über den in Fig. 3 durch die Haltemittel 5 und 5' verdeckten Riemen 3 hinausragen.

Im Hinblick auf Fig. 3 ist dort nun zu erkennen, dass das Haltemittel 5 ein erstes Zwischenstück 11 und ein zweites Zwischenstück 11' umfasst, über welches erste Zwischenstück 11 und zweite Zwischenstück 11' das Formatteil 28 gehalten wird. Das Formatteil 8 wird über das erste Zwischenstück 11 und das zweite Zwischenstück 11 jeweils schwenkbeweglich gehalten, so dass das Formatteil 28 selbst die gemeinsame Drehachse 13 bereitstellt bzw. so dass das Formatteil 28 selbst die gemeinsame Drehachse 13 ausbildet. Insbesondere wird das Formatteil 28 vom ersten Zwischenstück 11 und vom zweiten Zwischenstück 11' somit derart gehalten, dass das erste Zwischenstück 11 und das zweite Zwischenstück 11' unabhängig voneinander um eine durch das Formatteil 28 verlaufende und ggf. durch das Formatteil 28 selbst ausgebildete gemeinsame Drehachse 13 schwenkbar sind. Am ersten Zwischenstück 11 ist die erste Lauf- und/oder Gleitrolle 22 angeordnet. Am zweiten Zwischenstück 11' ist die zweite Lauf- und/oder Gleitrolle 24 angeordnet. Somit sind die erste Lauf- und/oder Gleitrolle 22 und die zweite Lauf- und/oder Gleitrolle 24 zusammen mit dem jeweiligen Zwischenstück 11 bzw. 11' um die gemeinsame Drehachse 13 schwenkbar.

Die Fig. 3 zeigt weiter, dass eine erste Schwenkachse 15 durch die am ersten Zwischenstück 11 angeordnete erste Lauf- und/oder Gleitrolle 22 verläuft. Der Flügel 12, welcher den ersten Befestigungsbereich 7 ausbildet und das Zwischenstück 11 sind um die erste Schwenkachse 15 relativ zueinander drehbar. Ebenso verläuft eine zweite Schwenkachse 15' durch die zweite Lauf- und/oder Gleitrolle 24. Der zweite Flügel 14, welcher den zweiten Befestigungsbereich 9 ausbildet und das zweite Zwischenstück 11' sind um die zweite Schwenkachse 15' relativ zueinander drehbar. Durch die durch das erste Haltemittel 5 ausgebildete gemeinsame Drehachse 13, die erste Schwenkachse 15 und die zweite Schwenkachse 15 besitzt das Haltemittel 5 eine hohe Flexibilität und kann hierdurch der Bewegung und Dehnung des Riemens 3 im Bereich einer Umlenkung folgen.

Die Fig. 4 zeigt eine schematische Perspektivansicht einer Ausführungsform eines erfindungsgemäßen Arbeitsmoduls 1. Das Arbeitsmodul 1 umfasst einen ersten umlaufend bewegten Riemen 3, an welchem über Haltemittel 5 (vgl. Figuren 1 bis 3) mehrere Formatteile 28 angeordnet sind. Zudem umfasst das Arbeitsmodul 1 einen zweiten umlaufend bewegten Riemen 3', an welchem weiterhin über Haltemittel 5 (vgl. Figuren 1 bis 3) mehrere Formatteile 28 angeordnet sind. Die Formatteile 28 sind in den Figuren vorliegender Patentanmeldung nicht vollständig dargestellt. Zudem sind ein weiterer erster umlaufend bewegter Riemen und ein weiterer zweiter umlaufend bewegter Riemen vorgesehen, welche in Fig. 4 nicht zu erkennen sind und auf einer gegenüberliegenden Seite des Transportbereichs TB angeordnet sind.

Dargestellt ist zudem eine Mitnehmerwelle 32, welche auf gegenüberliegenden Seiten des Transportbereichs TB angeordnete Riemen antriebstechnisch aneinander koppelt.

Die über Haltemittel 5 (vgl. Figuren 1 bis 3) am ersten Riemen 3 festgesetzten Formatteile 28 treten mit Artikeln einer jeweiligen palettierfähigen Lage rückseitig in Anlage und Schieben hierdurch die jeweilige palettierfähige Lage an Artikeln über den Transportbereich TB. Die am zweiten Riemen 3' angeordneten Formatteile 28 werden hierbei mit keinem oder geringem Abstand zu vordersten Artikeln der jeweiligen palettierfähigen Lage gemeinsam mit der jeweiligen palettierfähigen Lage über den Transportbereich TB bewegt und verhindern hierbei, dass die jeweiligen vordersten Artikel einer jeweiligen palettierfähigen Lage während des Schiebens ungewollt kippen.

Die Fig. 5 zeigt eine schematische Perspektivansicht mit einzelnen Details der Ausführungsform eines Arbeitsmoduls 1 gemäß Fig. 4. Der erste unter Verweis mit Ziffer 3 dargestellte Riemen wird von der Antriebsrolle 36 angetrieben. Weiter ist eine Umlenkrolle 37 vorgesehen, welche mit dem Riemen 3 in Kontakt steht. Fig. 5 lässt weiterhin ein mit dem ersten Riemen 3 über ein Haltemittel 5 in Verbindung stehendes Formatteil 28 sowie ein mit dem zweiten Riemen 3' über ein Haltemittel in Verbindung stehendes Formatteil 28 erkennen.

Wie zu den Figuren 1 bis 3 bereits beschrieben, verfügt ein jeweiliges Haltemittel 5 bzw. 5' über eine erste Lauf- und/oder Gleitrolle 22 bzw. 22' sowie über eine zweite Lauf- und/oder Gleitrolle 24 bzw. 24'. Fig. 5 zeigt nun eine erste als Stütze 31 ausgebildete Schiene 30, welche dem ersten Riemen 3 zugeordnet ist. Weiter zeigt Fig. 5 eine zweite Schiene 30', die ebenso als zweite Stütze 31' ausgebildet ist und dem zweiten Riemen 3' zugeordnet ist. Lauf- und/oder Gleitrollen 22, 22' bzw. 24 und 24', welche als Bestandteil von am ersten Riemen 3 festgesetzten Haltemitteln 5 bzw. 5' ausgebildet sind, stehen mit der dem ersten Riemen 3 zugeordneten Schiene 30 bzw. mit der dem ersten Riemen 3 zugeordneten Stütze 31 in Oberflächenkontakt und werden über die dem ersten Riemen 3 zugeordnete Schiene 30 bzw. über die dem ersten Riemen 3 zugeordnete Stütze 31 geführt. Lauf- und/oder Gleitrollen 22, 22' bzw. 24 und 24', welche als Bestandteil von am zweiten Riemen 3 festgesetzten Haltemitteln 5 bzw. 5' ausgebildet sind, stehen mit der dem zweiten Riemen 3 zugeordneten Schiene 30' bzw. mit der dem zweiten Riemen zugeordneten Stütze 31' in Oberflächenkontakt und werden über die dem zweiten Riemen 3' zugeordnete Schiene 30' bzw. über die dem zweiten Riemen 3' zugeordnete Stütze 31' geführt. Hierdurch kann einer ungewollten Torsion des ersten Riemens 3 und des zweiten Riemens 3' entgegengewirkt werden.

Um eine solchen Torsion auch in einem Bereich entgegenzuwirken, welcher sich zwischen der Umlenkrolle 37 und der Antriebswelle 36 befindet, ist in diesem Bereich eine jeweilige Führung 35 bzw. 35' vorgesehen, welche flächig mit dem jeweiligen Riemen 3 bzw. 3' in Oberflächenkontakt steht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1: Arbeitsmodul
- 2: Antriebsmittel
- 3: erster Riemen
- 3': zweiter Riemen
- 5: erstes Haltemittel
- 5': zweites Haltemittel
- 7: erster Befestigungsbereich (erster Flügel)
- 7': erster Befestigungsbereich (zweiter Flügel)
- 9: zweiter Befestigungsbereich (erster Flügel)
- 9': zweiter Befestigungsbereich (zweiter Flügel)
- 11: erstes Zwischenstück
- 11': zweites Zwischenstück
- 12: erster Flügel (erstes Haltemittel)
- 12': erster Flügel (zweites Haltemittel)
- 13: Drehachse
- 14: zweiter Flügel (erstes Haltemittel)
- 14': zweiter Flügel (zweites Haltemittel)
- 15: erste Schwenkachse
- 15': zweite Schwenkachse
- 22: erste Lauf- und/oder Gleitrolle (erstes Haltemittel)
- 22': erste Lauf- und/oder Gleitrolle (zweites Haltemittel)
- 24: erste Leiste (erster Befestigungsbereich, erstes Haltemittel)
- 24': erste Leiste (erster Befestigungsbereich, zweites Haltemittel)
- 26: zweite Leiste (zweiter Befestigungsbereich, erstes Haltemittel)
- 26': zweite Leiste (zweiter Befestigungsbereich, zweites Haltemittel)
- 30: Schiene
- 31: Stütze
- 32: Mitnehmerwelle
- 35: Führung (erster Riemen)
- 35': Führung (zweiter Riemen)
- 36: Antriebsrolle
- 37: Umlenkrolle
- TB: Transportbereich

## Patentansprüche

1. Zum Umgang mit Artikeln und/oder Verpackungsmaterial ausgebildetes Arbeitsmodul (1) für eine Verpackungsvorrichtung, umfassend
- mindestens ein umlaufend geführtes Antriebsmittel (2, 2'),
- mehrere Formatteile (28), die zum Einwirken auf Artikel und/oder zum Umgang mit Verpackungsmaterial ausgebildet sind, sowie
- mehrere Haltemittel (5, 5'), wobei vorgesehen ist, dass
- das mindestens eine umlaufend geführte Antriebsmittel (2, 2') wenigstens einen umlaufend geführten Riemen (3, 3') umfasst, an welchen wenigstens einen umlaufend geführten Riemen (3, 3') die mehreren zum Einwirken auf Artikel und/oder zum Umgang mit Verpackungsmaterial ausgebildeten Formatteile (28) über die mehreren Haltemittel (5, 5') mechanisch gekoppelt sind, wobei die mehreren Haltemittel (5, 5') jeweils über wenigstens zwei Befestigungsbereiche (7, 7', 9, 9') am wenigstens einen umlaufend geführten Riemen (3, 3') angeordnet sind, wobei die jeweiligen wenigstens zwei Befestigungsbereiche (7, 7', 9, 9') im Hinblick auf den Umfangsverlauf des wenigstens einen umlaufend geführten Riemens (3, 3') versetzt zueinander positioniert sind, **dadurch gekennzeichnet, dass**
- die mehreren Haltemittel (5, 5') jeweils eine gemeinsame Drehachse (13) für die jeweiligen wenigstens zwei Befestigungsbereiche (7, 7', 9, 9') besitzen, um welche jeweilige gemeinsame Drehachse (13) die jeweiligen wenigstens zwei Befestigungsbereiche (7, 7', 9, 9') eines jeweiligen Haltemittels (5, 5') unabhängig voneinander schwenkbar sind und
- dass die mehreren Haltemittel (5, 5') für einen jeweiligen ersten Befestigungsbereich (7, 7') eine jeweilige erste Schwenkachse (15) ausbilden, um welche der jeweilige erste Befestigungsbereich (7, 7') gedreht werden kann und bei welchem die mehreren Haltemittel (5, 5') für einen jeweiligen zweiten Befestigungsbereich (9, 9') eine jeweilige zweite Schwenkachse (15') ausbilden, um welche jeweilige zweite Schwenkachse (15') der jeweilige zweite Befestigungsbereich (9, 9') gedreht werden kann, wobei die erste Schwenkachse (15), die zweite Schwenkachse (15') und die gemeinsame Drehachse (13) entlang des Umfangsverlaufs des jeweiligen wenigstens einen umlaufend geführten Riemens (3, 3') versetzt und parallel zueinander orientiert sind.

2. Arbeitsmodul nach Anspruch 1, bei welchem jedem der wenigstens zwei Befestigungsbereich (7, 7', 9, 9') eine Leiste (24, 24', 26, 26') zugeordnet ist, welche jeweilige Leiste (24, 24', 26, 26') in eine durch eine Verzahnung des wenigstens einen umlaufend geführten Riemens (3, 3') ausgebildete Nut eingesetzt ist und welche jeweilige Leiste (24, 24', 26, 26') das jeweilige Haltemittel (5, 5') klemmend am wenigstens einen umlaufend geführten Riemen (3, 3') festsetzt.

3. Arbeitsmodul nach Anspruch 1 oder Anspruch 2, bei welchem die mehreren Haltemittel (5, 5') ihre jeweiligen wenigstens zwei Befestigungsbereiche (7, 7', 9, 9') zueinander abstandsveränderlich ausbilden.

4. Arbeitsmodul nach Anspruch 1, Anspruch 1, bei welchem die mehreren Haltemittel (5, 5') eine jeweilige insbesondere als Aufnahme ausgebildete Befestigung für ein jeweiliges Formatteil (28) bereitstellen, wobei die insbesondere als Aufnahme ausgebildete Befestigung und die gemeinsame Drehachse (13) fluchtend zueinander orientiert sind.

5. Arbeitsmodul nach einem der vorherigen Ansprüche, umfassend mindestens eine vorzugsweise als Schiene (30, 30') ausgebildete Stütze (31, 31'), wobei die mindestens eine vorzugsweise als Schiene (30, 30') ausgebildete Stütze (31, 31') derart positioniert ist, dass die mehreren Haltemittel (5, 5') im Verlauf einer über den wenigstens einen umlaufend geführten Riemen (3, 3') bewirkten und im Wesentlichen linearen Bewegung mit der mindestens einen vorzugsweise als Schiene (30, 30') ausgebildeten Stütze (31, 31') in Oberflächenkontakt stehen.

6. Arbeitsmodul nach Anspruch 5, bei welchem die mehreren Haltemittel (5, 5') jeweils mindestens eine seitlich vom jeweiligen Haltemittel (5, 5') abstehende Lauf- und/oder Gleitrolle (22, 22', 24, 24') besitzen, über welche jeweilige mindestens eine seitlich vom jeweiligen Haltemittel (5, 5') abstehende Lauf- und/oder Gleitrolle (22, 22', 24, 24') das jeweilige Haltemittel (5, 5') mit der mindestens einen vorzugsweise als Schiene (30, 30') ausgebildeten Stütze (31, 31') in Oberflächenkontakt steht.

7. Arbeitsmodul nach einem der Ansprüche 1 bis 6, bei welchem die mehreren Haltemittel (5, 5) jeweils mindesteins eine erste seitlich vom jeweiligen Haltemittel (5, 5') abstehende Lauf- und/oder Gleitrolle (22, 22') sowie jeweils mindestens eine zweite vom jeweiligen Haltemittel (5, 5') seitlich abstehende Lauf- und/oder Gleitrolle (24, 24') umfassen, wobei die mehreren Haltemittel (5, 5') über ihre ersten und zweiten Lauf- und/oder Gleitrollen (22, 22', 24, 24') mit der mindestens einen vorzugsweise als Schiene (30, 30') ausgebildeten Stütze (31, 31') in Oberflächenkontakt stehen und wobei vorgesehen ist, dass die erste Lauf- und/oder Gleitrolle (22, 22') und die zweite Lauf- und/oder Gleitrolle (24, 24') eines jeweiligen Haltemittels (5, 5') unabhängig voneinander um die gemeinsame Drehachse (13) eines jeweiligen Haltemittels (5, 5') schwenkbar sind.

8. Verfahren zum Umgang mit Artikeln und/oder Verpackungsmaterial, umfassend ein Arbeitsmodul (1) nach einem der Ansprüche 1 bis 7 und bei welchem Verfahren vorgesehen ist, dass der wenigstens eine umlaufend geführte Riemen (3, 3') rotierend bewegt wird, woraus resultierend die mehreren Formatteile (28) auf Artikel einwirken und/oder Verpackungsmaterial auf Artikel aufbringen.

## Claims

1. A work module (1) for a packaging apparatus, the work module (1) being designed for handling articles and/or packaging material and comprising
- at least one circulatingly guided driving means (2, 2'),
- a plurality of format parts (28) designed to act upon articles and/or to handle packaging material, as well as
- a plurality of holding means (5, 5'), wherein it is provided that
- the at least one circulatingly guided driving means (2, 2') comprises at least one circulatingly guided belt (3, 3'), to which at least one circulatingly guided belt (3, 3') the plurality of format parts (28) designed to act upon articles and/or to handle packaging material are mechanically coupled via the plurality of holding means (5, 5'), wherein the plurality of holding means (5, 5') are each arranged to the at least one circulatingly guided belt (3, 3') via at least two fastening portions (7, 7', 9, 9'), wherein the particular at least two fastening portions (7, 7', 9, 9') are positioned offset to each other with regard to the circumferential course of the at least one circulatingly guided belt (3, 3'), **characterised in that**
- the plurality of holding means (5, 5') in each instance have a common axis of rotation (13) for the particular at least two fastening portions (7, 7', 9, 9'), about which particular common axis of rotation (13) the particular at least two fastening portions (7, 7', 9, 9') of a particular holding means (5, 5') are swivelable independently of one another, and
- **in that** the plurality of holding means (5, 5') form a particular first swivel axis (15) for a particular first fastening portion (7, 7'), about which first swivel axis (15) the particular first fastening portion (7, 7') can be rotated, and in which the plurality of holding means (5, 5') form a particular second swivel axis (15') for a particular second fastening portion (9, 9'), about which particular second swivel axis (15') the particular second fastening portion (9, 9') can be rotated, wherein the first swivel axis (15), the second swivel axis (15'), and the common axis of rotation (13) are oriented offset and parallel to each other along the circumferential course of the particular at least one circulatingly guided belt (3, 3').

2. The work module according to claim 1, in which each of the at least two fastening portions (7, 7', 9, 9') has a ledge (24, 24', 26, 26') assigned to it, which particular ledge (24, 24', 26, 26') is inserted into a notch formed by a toothing of the at least one circulatingly guided belt (3, 3'), and which particular ledge (24, 24', 26, 26') fixes the particular holding means (5, 5') in a clamping manner to the at least one circulatingly guided belt (3, 3').

3. The work module according to claim 1 or claim 2, in which the plurality of holding means (5, 5') form their particular at least two fastening portions (7, 7', 9, 9') so as to be variably spaced apart from each other.

4. The work module according to claim 1, in which the plurality of holding means (5, 5') provide a particular fastener for a particular format part (28), the fastener being designed, in particular, as a reception, wherein the fastener, which is designed, in particular, as a reception, and the common axis of rotation (13) are oriented to be aligned with each other.

5. The work module according to one of the previous claims, comprising at least one support (31, 31') preferably designed as a rail (30, 30'), wherein the at least one support (31, 31') preferably designed as a rail (30, 30') is positioned such that the plurality of holding means (5, 5') are in surface contact with the at least one support (31, 31') preferably designed as a rail (30, 30') in the course of a substantially linear movement effected via the at least one circulatingly guided belt (3, 3').

6. The work module according to claim 5, in which the plurality of holding means (5, 5') each have at least one running roller and/or slide roller (22, 22', 24, 24') protruding laterally from the particular holding means (5, 5'), via which at least one running roller and/or slide roller (22, 22', 24, 24') protruding laterally from the particular holding means (5, 5') the particular holding means (5, 5') is in surface contact with the at least one support (31, 31') preferably designed as a rail (30, 30').

7. The work module according to one of the claims 1 to 6, in which the plurality of holding means (5, 5') comprise in each instance at least one first running roller and/or slide roller (22, 22') protruding laterally from the particular holding means (5, 5') as well as in each instance at least one second running roller and/or slide roller (24, 24') protruding laterally from the particular holding means (5, 5'), wherein the plurality of holding means (5, 5') are in surface contact with the at least one support (31, 31') preferably designed as a rail (30, 30') via their first and second running rollers and/or slide rollers (22, 22', 24, 24'), and wherein it is provided that the first running roller and/or slide roller (22, 22') and the second running roller and/or slide roller (24, 24') of a particular holding means (5, 5') are swivelable independently of one another about the common axis of rotation (13).

8. A method for handling articles and/or packaging material, the method comprising a work module (1) according to one of the claims 1 to 7, and in which method it is provided that the at least one circulatingly guided belt (3, 3') is moved in a rotating manner, with the result that the plurality of format parts (28) act upon articles and/or apply packaging material to articles.

## Revendications

1. Module de travail (1) conçu pour la manipulation d'articles et/ou de matériau d'emballage, pour un dispositif d'emballage, comprenant
- au moins un moyen d'entraînement (2, 2') guidé en circulation,
- une pluralité de pièces de format (28) qui sont conçues pour agir sur des articles et/ou pour manipuler du matériau d'emballage, ainsi qu'
- une pluralité de moyens de maintien (5, 5'), dans lequel il est prévu que
- ledit au moins un moyen d'entraînement (2, 2') guidé en circulation comprend au moins une courroie (3, 3') guidée en circulation; sur laquelle au moins une courroie (3, 3') guidée en circulation, la pluralité de pièces de format (28) conçues pour agir sur des articles et/ou pour manipuler du matériau d'emballage sont couplées de manière mécanique par l'intermédiaire de ladite pluralité de moyens de maintien (5, 5'), dans lequel la pluralité de moyens de maintien (5, 5') sont agencés chacun sur ladite au moins une courroie (3, 3') guidée en circulation, par au moins deux zones de fixation (7, 7', 9, 9'), dans lequel lesdites au moins deux zones de fixation (7, 7', 9, 9') respectives sont positionnées en étant décalées l'une par rapport à l'autre en vue du tracé circonférentiel de ladite au moins une courroie (3, 3') guidée en circulation, **caractérisé par le fait que**
- la pluralité de moyens de maintien (5, 5') ont chacun un axe de rotation (13) commun pour lesdites au moins deux zones de fixation (7, 7', 9, 9') respectives; autour duquel axe de rotation (13) commun respectif, lesdites au moins deux zones de fixation (7, 7', 9, 9') respectives d'un moyen de maintien (5, 5') respectif peuvent pivoter indépendamment l'une de l'autre, et
- que la pluralité de moyens de maintien (5, 5') forment un premier axe de pivotement (15) respectif pour une première zone de fixation (7, 7') respective, autour duquel la première zone de fixation (7, 7') respective peut être tournée, et dans lequel les plusieurs moyens de maintien (5, 5') forment un deuxième axe de pivotement (15') respectif pour une deuxième zone de fixation (9, 9') respective, c'est autour duquel deuxième axe de pivotement (15') respectif que ladite deuxième zone de fixation (9, 9') respective peut être tournée, dans lequel le premier axe de pivotement (15), le deuxième axe de pivotement (15') et l'axe de rotation (13) commun sont décalés les uns par rapport aux autres et orientés parallèlement les uns aux autres le long du tracé circonférentiel de ladite au moins une courroie (3, 3') respective guidée en circulation.

2. Module de travail selon la revendication 1, dans lequel à chacune desdites au moins deux zones de fixation (7, 7', 9, 9') est associée une baguette (24, 24', 26, 26'), laquelle baguette (24, 24', 26, 26') respective est insérée dans une rainure formée par une denture de ladite au moins une courroie (3, 3') guidée en circulation, et laquelle baguette (24, 24', 26, 26') respective immobilise par serrage le moyen de maintien (5, 5') respectif sur ladite au moins une courroie (3, 3') guidée en circulation.

3. Module de travail selon la revendication 1 ou la revendication 2, dans lequel la pluralité de moyens de maintien (5, 5') forment leurs au moins deux zones de fixation (7, 7', 9, 9') respectives à distance variable les unes par rapport aux autres.

4. Module de travail selon la revendication 1, dans lequel la pluralité de moyens de maintien (5, 5') fournissent une fixation respective conçue en particulier en tant que logement pour une pièce de format (28) respective, dans lequel ladite fixation conçue en particulier en tant que logement et l'axe de rotation (13) commun sont orientés en étant alignés l'un sur l'autre.

5. Module de travail selon l'une quelconque des revendications précédentes, comprenant au moins un support (31, 31') conçu de préférence en tant que rail (30, 30'), dans lequel ledit au moins un support (31, 31') conçu de préférence en tant que rail (30, 30') est positionné de telle manière que la pluralité de moyens de maintien (5, 5') sont en contact de surface avec ledit au moins un support (31, 31') conçu de préférence en tant que rail (30, 30'), au cours d'un mouvement pour l'essentiel linéaire provoqué par ladite au moins une courroie (3, 3') guidée en circulation.

6. Module de travail selon la revendication 5, dans lequel la pluralité de moyens de maintien (5, 5') comprennent chacun au moins un galet de roulement et/ou de glissement (22, 22', 24, 24') qui fait saillie latéralement du moyen de maintien (5, 5') respectif, c'est par l'intermédiaire duquel au moins un galet de roulement et/ou de glissement (22, 22', 24, 24') faisant saillie latéralement du moyen de maintien (5, 5') respectif que le moyen de maintien (5, 5') respectif est en contact de surface avec ledit au moins un support (31, 31') conçu de préférence en tant que rail (30, 30').

7. Module de travail selon l'une quelconque des revendications 1 à 6, dans lequel la pluralité de moyens de maintien (5, 5) comprennent chacun au moins un premier galet de roulement et/ou de glissement (22, 22') faisant saillie latéralement du moyen de maintien (5, 5') respectif ainsi qu'au moins un deuxième galet de roulement et/ou de glissement (24, 24') faisant saillie latéralement du moyen de maintien (5, 5') respectif, dans lequel la pluralité de moyens de maintien (5, 5') sont en contact de surface, via leurs premier et deuxième galets de roulement et/ou de glissement (22, 22', 24, 24'), avec ledit au moins un support (31, 31') conçu de préférence en tant que rail (30, 30'), et dans lequel il est prévu que le premier galet de roulement et/ou de glissement (22, 22') et le deuxième galet de roulement et/ou de glissement (24, 24') d'un moyen de maintien (5, 5') respectif peuvent pivoter indépendamment les uns des autres autour de l'axe de rotation (13) commun d'un moyen de maintien (5, 5') respectif.

8. Procédé de manipulation d'articles et/ou de matériau d'emballage, comprenant un module de travail (1) selon l'une quelconque des revendications 1 à 7 et dans lequel procédé il est prévu que ladite au moins une courroie (3, 3') guidée en circulation est déplacée en rotation, d'où résulte que les plusieurs pièces de formats (28) agissent sur des articles et/ou appliquent du matériau d'emballage sur des articles.
